# EUROPEAN PATENT SPECIFICATION

(11) **EP 3 738 329 B1**
(45) Date of publication and mention of the grant of the patent: **31.01.2024**
(21) Application number: 18829851.7
(22) Date of filing: 20.12.2018
(51) Int. Cl.: H04W 8/18, H04W 12/12, H04L 9/08

(54) **VALIDATION OF SUBSCRIPTION CONCEALED IDENTIFIERS IN MOBILE NETWORKS**
VALIDIERUNG VON TEILNAHMEVERDECKTEN IDENTIFIKATOREN BEI MOBILEN NETZWERKEN
VALIDATION D'IDENTIFICATEURS MASQUÉS D'ABONNEMENT DANS DES RÉSEAUX MOBILES

(30) Priority: 12.01.2018 US 201862616957 P
(43) Date of publication of application: 18.11.2020
(73) Proprietor: Telefonaktiebolaget LM Ericsson (publ), 164 83 Stockholm (SE)
(72) Inventor: NAKARMI, Prajwol, Kumar, 19142 Sollentuna (SE); SAARINEN, Pasi, 17564 Järfälla (SE)
(74) Representative: Ericsson
(86) International application number: PCT/EP2018/086409
(87) International publication number: WO 2019/137792

(56) References cited:
- EP-A1- 1 873 998
- WO-A1-2018/006627
- "3 Generation Partnership Project; Technical Specification Group Services and System Aspects; Security Architecture and Procedures for 5G System (Release 15)", 3GPP STANDARD; TECHNICAL SPECIFICATION; 3GPP TS 33.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG3, no. V0.6.0, 4 January 2018 (2018-01-04), pages 1-79, XP051392349, [retrieved on 2018-01-04]
- NOKIA: "SIDF functionality", 3GPP DRAFT; S3-172356-V4 SIDF FUNCTIONALITY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. Singapore; 20171009 - 20171013 6 October 2017 (2017-10-06), XP051348229, Retrieved from the Internet: URL:http://www.3gpp.org/ftp/Meetings_3GPP_ SYNC/SA3/Docs/ [retrieved on 2017-10-06]

## Description

### TECHNICAL FIELD

The present disclosure relates generally to security procedures in mobile networks and, more particularly to techniques for preventing unnecessary use of network resources in a mobile network supporting subscription concealed identifiers.

### BACKGROUND

The Third Generation Partnership Project (3GPP) is developing the next generation of mobile networks known as Fifth Generation (5G). The earlier generations of mobile networks were called Fourth Generation (4G) or Long Term Evolution (LTE), Third Generation (3G) or Universal Mobile Telecommunications System (UMTS), and Second Generation (2G) or Global System for Mobile Communications (GSM).

A 5G network is maintained and its services are offered by Mobile Network Operators (MNOs). MNOs are distinguishable from each other by two types of codes, namely the Mobile Country Code (MCC) and the Mobile Network Code (MNC). To use a 5G network offered by a particular MNO, users are required to have a subscription, which is a contractual relationship between the MNO and the user. In cases when the user lacks a subscription to some particular MNO (e.g., in a so-called roaming scenario), a relationship is achieved between the user and the Visited Network by roaming agreements between the MNO of the network where the user has a subscription, i.e., the user's Home Network, and the MNO that the user is being served, i.e., the Visited Network (VN).

Each subscription in a MNO's 5G network is identified by a unique long-term identifier called the Subscription Permanent Identifier (SUPI). Users wirelessly access a 5G network over-the-air using wireless devices known as User Equipment (UEs). Before providing any service, a 5G network needs to identify a user, i.e., the user's subscription, behind a UE. For purposes of identification, UEs in earlier generations of mobile networks (4G, 3G, and 2G) sent the users' unique long-term identifier over-the-air. This approach was considered a privacy issue because users could be tracked or identified by any unauthorized entity capable of intercepting message or acting as man-in-the-middle over-the-air. However, the MNO of a 5G network has an ability to offer better privacy to its users so that their unique long-term identifiers (i.e., SUPIs) are not visible over-the-air. More particularly, 5G networks provide support for Subscription Concealed Identifiers (SUCls) that enable a UE to encrypt its SUPI and/or other subscription information. Thus, the UEs can generate and send a SUCI over-the-air in place of its SUPI to conceal the subscriber identity. In mobile networks supporting SUCls, the Home Network provides the UEs with all information that is necessary for the calculation of the SUCI. This information is denoted as encryption parameters. Different UEs can be configured to calculate the SUCI differently (i.e., with different encryption parameters), which provides flexibility to the MNO.

While SUCIs provide increased security to users, there are some drawbacks from the perspective of the MNO. The use of SUCIs increases complexity of network operations and the MNO must provide sufficient network resources for decrypting SUCls. The MNO is also faced with the challenge of determining whether a received SUCI is valid. One approach is to validate the decryption result after the SUCI is decrypted. However, a malicious user or misbehaving UE could cause the Home Network to unnecessarily expend resources decrypting an invalid SUCI. Therefore, it is desirable to avoid using network resources on decryption unnecessarily where the SUCI is not valid. There is also a possibility of replay attacks where a malicious user replays a previously used SUCI in an attempt to make the Home Network reveal authentication vectors or other security information.

Accordingly, there is a need for improved methods of validating a SUCI to improve network security and prevent unnecessarily expending network resources on decryption.

WO 2018/006627 A1 discloses an access point decrypting a received encrypted data transmission and validating the data transmission based on a UE ID and signature.

### SUMMARY

The present disclosure provides techniques for improving network security and preventing unnecessary use of network resources in a mobile network supporting SUCIs as claimed in claims 1, 12 and 13. The validation techniques herein described generally comprise decrypting the SUCI in a received message to obtain subscription information and using the subscription information from the decrypted message to validate the SUCI.

The techniques herein described provide an efficient and effective mechanism for a Home Network to determine if a received SUCI is valid. The efficiency comes from the fact that the Home Network does not need to spend extra resources (e.g., computation, memory, networking, storage) for handling invalid SUCIs. The effectiveness comes from the fact that the Home Network knows for certain if the received SUCI is valid or not, which mitigates risks of fraud or security attacks.

### BRIEF DESCRIPTION OF THE DRAWINGS

Figure 1 illustrates an exemplary mobile network according to one embodiment supporting use of subscription concealed identifiers.
Figure 2 is a signaling diagram illustrating a conventional UE registration using a subscription concealed identifier.
Figure 3 illustrates an exemplary message including a subscription concealed identifier.
Figure 4 is a signaling diagram illustrating a UE registration using a subscription concealed identifier according to one embodiment of the disclosure.
Figure 5 is a flow diagram illustrating a validation procedure for validating a subscription concealed identifier.
Figure 6 is a flow diagram illustrating another validation procedure for validating a subscription concealed identifier.
Figure 7 is a schematic block diagram of a network node configured to validate a subscription concealed identifier as herein described.
Figure 8 is a functional block diagram of a network node configured to validate a subscription concealed identifier as herein described.

### DETAILED DESCRIPTION

Referring now to the drawings, an exemplary embodiment of the disclosure will be described in the context of a 5G mobile network 10. Those skilled in the art will appreciate that the methods and apparatus herein described are not limited to use in 5G networks 10, but may also be used in mobile networks 10 operating according to other standards that support SUCIs.

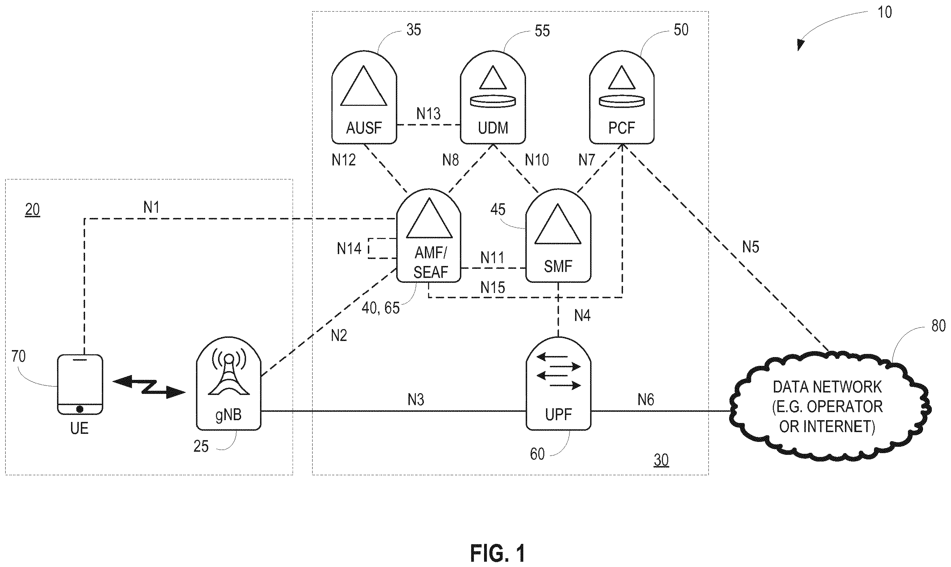

Figure 1 illustrates a mobile network 10 according to one exemplary embodiment. The mobile network 10 comprises a Radio Access Network (RAN) 20 and a core network 30. The RAN 20 comprises one or more base stations 25 providing radio access to UEs 70 operating within the mobile network 10. The base stations 25 are also referred to as gNodeBs (gNBs). The core network 30 provides a connection between the RAN 20 and other Packet Data Networks (PDNs) 80.

In one exemplary embodiment, the core network 30 comprises an Authentication Server Function (AUSF) 35, Access and Mobility Management Function (AMF) 40, Session Management Function (SMF) 45, Policy Control Function (PCF) 50, Unified Data Management (UDM) function 55, and User Plane Function (UPF) 60. These components of the mobile network 10 comprise logical entities that reside in one or more core network nodes. The functions of the logical entities may be implemented by one or more processors, hardware, firmware, or a combination thereof. The functions may reside in a single core network node, or may be distributed among two or more core network nodes.

The AMF 40, among other things, performs access control and mobility management functions and is the termination point for Non-access Stratum (NAS) security. A Security Anchor Function (SEAF) 65 may be co-located with the AMF 40, or may reside in a separate location. The SEAF 65 handles security functions, such as establishing and sharing keys used the UEs 70. The SEAF 65 may also initiate authentication during a UE registration as herein after described. The SMF 45 performs session management functions, such as setting up and controlling sessions according to network policies. The UPF 60 serves as a gateway to external PDNs 80 and routes user data between the external PDNs 80 and the UE 70. The PCF 50 functions as a policy server and is generally equivalent to the Policy and Charging Rules Function (PCRF) in 4G networks. The UDM 55 stores subscriber data and profiles. The AUSF 35 handles authentication of UEs 70 and stores data used for authentication.

In order to acquire service from the network, the UE 70 performs a registration procedure. In a conventional UE registration procedure, as well as many other signaling procedures, the UE 70 transmits a SUPI or other UE identifier (UE ID) to the network 10, which raises some privacy concerns. To provide greater privacy to subscribers, 5G networks 10 provide support for the use of SUCIs in place of SUPls or other UE IDs.

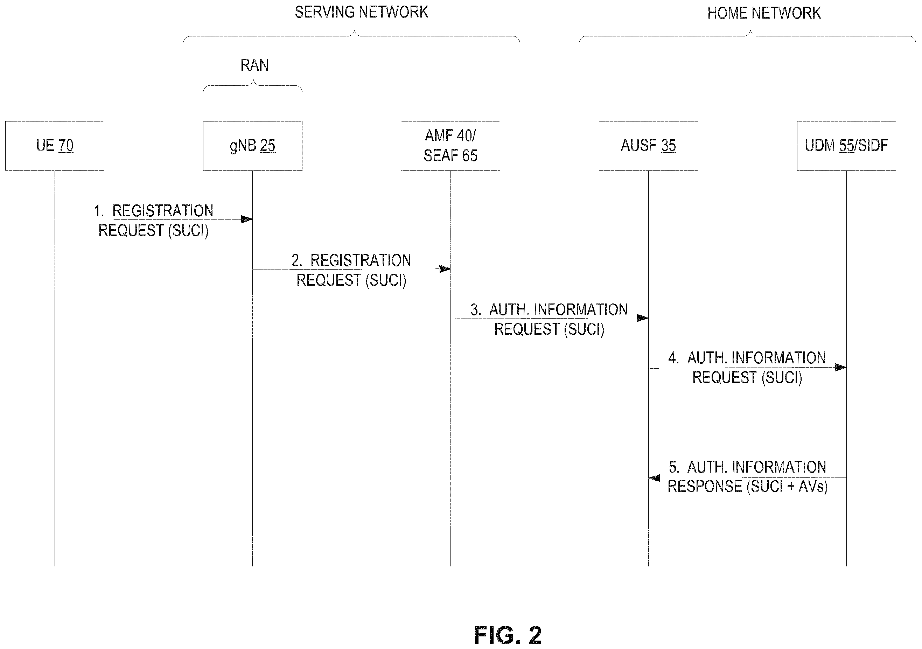

Figure 2 is a simplified signaling diagram showing an example of a conventional UE registration procedure using a SUCI. Note that the UE registration procedure for 5G involves more steps than shown in Figure 2 but the signaling diagram gives an overview of how the SUCI travels over the network 10.

In Step 1, the UE 70 connects to a gNB 25 over-the-air and sends a Registration Request. The Registration Request contains a SUCI calculated by the UE 70. In Step 2, the gNB 25 forwards the received Registration Request to a core network node, such as the AMF 40 or SEAF 65 if located separately. The gNB 25 and AMF/SEAF 40/65 are collectively denoted as Serving Network. In Step 3, the SEAF 65 locates the AUSF 35 and sends the AUSF 35 an Authentication Information Request (AIR) that among other information contains the received SUCI. The AUSF 35 then contacts the UDM 55 or a Subscription Identifier De-concealing Function (SIDF) function in Step 4. The AUSF 35 and UDM/SIDF 55 are collectively denoted as Home Network. After validating the SUCI, the UDM 55 at Step 5 returns an Authentication Information Response containing the SUPI and Authentication Vectors (AVs) associated with the subscriber. It may be noted that the in case of roaming, the Serving Network and the Home Network belong to different MNOs while otherwise the Serving Network and Home Network both belong to the same MNO.

For calculation of the SUCI, the Home Network configures the subscriber's devices (i.e., UEs 70) with encryption parameters. For various reasons (e.g., load balancing, use case specific security level, network slice specific security, and subscription specific privacy offering, etc.) the Home Network could configure a first set of UEs 70 with one set of encryption parameters and another set of UEs 70 with another set of encryption parameters. As one example, the Home Network configures different UEs 70 or different groups of UEs 70 with different Home Network public keys but the same encryption scheme. As another example, the Home Network configures different UEs 70 or different groups of UEs 70 with different encryption schemes but the same Home Network public key. As a further example, the Home Network configures different UEs or different groups of UEs 70 with different Home Network public keys and different encryption schemes. In yet another example, the Home Network configures different UEs 70 with same Home Network public keys and same encryption scheme, but other encryption parameters, such as length of Medium Access Control (MAC), that are different. With the possibility of different UEs 70 using different encryption parameters, it is challenging for the Home Network to determine whether a received SUCI is valid.

One solution is to assign identifiers for various encryption parameters so that Home Network could use those identifiers to determine if the received SUCI is valid. These identifiers can be included in messages that contain a SUCI and used by the UDM 55 to decrypt the SUCI. For example, a Home Network Public Key Identifier (HN-PKI) can be used to identify which public key should be used and an Encryption Scheme Identifier (ESID) can be used to identify which encryption scheme should be used. If the decryption using these parameters is successful, the SUCI is considered valid. These encryption parameters could be included in unencrypted information elements (lEs) of any message containing a SUCI. The unencrypted IEs could be in the header or message body.

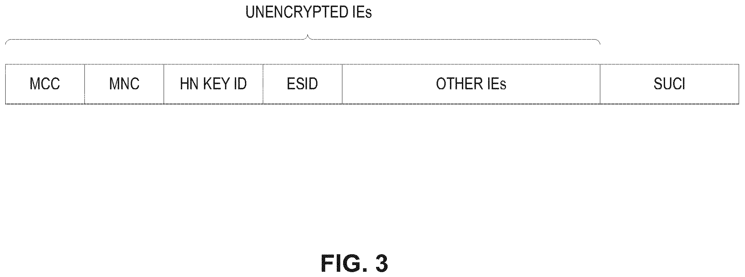

Figure 3 illustrates an exemplary message containing a SUCI. The message includes the MCC and MNC of the Home Network of the subscriber. The message further includes the HN-PKI and ESID used to generate the SUCI.

The above mentioned solution works partially. However there are multiple cases where this approach is not entirely sufficient. For example, consider a case where a Serving Network blocks all requests from UEs 70 that use encryption schemes other than the null-scheme. In this case the UE 70 might revert to using the null-scheme in order to get service. This could happen for different configuration parameters and not only the ESID. In this case, all SUCIs that are decryptable are considered valid. This means that for example a broken but standardized encryption scheme with an exponential decryption time for a special SUCI could be used to waste resources of the Home Network. A malicious UE 70 might even try to use completely different encryption parameters to abuse issues in unused encryption schemes.

To avoid this issue, the Home Network could be configured to only accept SUCIs that are derived using encryption parameters currently in use by the subscribers in its network. In this case, as long as a broken encryption scheme is not provisioned to any UE 70, the Home Network would not attempt to decrypt the SUCI.

Using the above described approaches, there will always be cases where there are multiple valid Home Network public keys and encryption scheme configurations. For example, when a Home Network public key is expired, the Home Network might re-provision UEs 70 with a new Home Network public key. Because the Home Network might have many subscribers, or wants to perform gradual rollout, both the old (and possibly expired) and the new Home Network public key will be valid for a period of time. Also, when an encryption scheme is broken, the Home Network may re-provision a new encryption scheme. In this case, there also will be a period of time where there exists some UEs 70 with the old configuration and some UEs 70 with the new configuration. Similar problems from re-provisioning can occur for all encryption parameters. Depending on the provisioning method, the Home Network may not know whether a provisioning has been successful or not.

Under abnormal or fraudulent conditions, misbehaving UEs 70 could still keep using the "old" encryption parameters. Additionally, compromised or untrusted network functions in the communication path could send the old cached SUCI where the old encryption parameters were used. In this case the Home Network will consider the SUCI valid as long as it is decrypted correctly and the encryption parameters are in use by some subscriber.

If a Home Network is trying to migrate from a broken encryption scheme, it would accept SUCIs calculated with the broken encryption scheme until all its subscribers had been provisioned with the new scheme. An encryption scheme may be considered broken if the encryption scheme has been compromised, is determined to be vulnerable to attack, or has a flaw that can be exploited. Re-provisioning new encryption parameters could take years if for example some subscribers are using UEs 70 that are not compatible with the provisioning method used by the Home Network. During this time, attackers can abuse the weaknesses in this encryption scheme. Such weaknesses could for example be used to achieve replay attacks of old SUCIs to make the Home Network reveal authentication vectors as shown in Step 5 of Figure 1. Additionally, in cases where the Home Network public key is considered secret, a leaked older Home Network public key will allow attackers to waste resources of the Home Network which perceives valid SUCIs as coming from a known subscriber and proceeds to prepare resources to handle that subscriber.

One aspect of the disclosure is a mechanism for validating SUCIs to mitigate the above described problems. The validating techniques herein described are intended to avoid expending network resources unnecessarily, and to provide greater protection against security threats. In embodiments of the disclosure, the UDM 55 or other network node is configured to decrypt the SUCI in a received message containing the SUCI to obtain subscription information and to use the subscription information from the decrypted message to validate the SUCI.

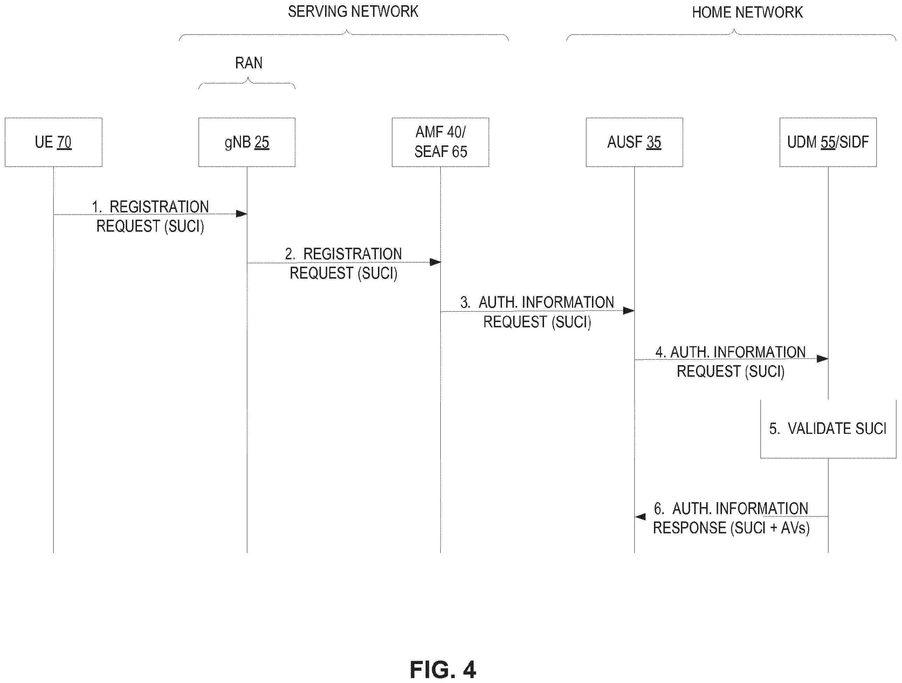

Figure 4 illustrates a UE registration procedure incorporating the validation techniques as herein described. In Step 1, the UE 70 connects to a gNB 25 over-the-air and sends a Registration Request as previously described. The Registration Request contains a SUCI calculated by the UE 70. Additionally, the Registration Request may contain the mobile network identifiers (e.g., MCC and MNC) and encryption parameters (e.g., HN-PKI and ESID) as shown in Figure 3. In Step 2, the gNB 25 forwards the received Registration Request to the AMF 40 or SEAF 65 if located separately. In Steps 3 and 4, an Authentication Information Request is generated and forwarded to the UDM 55. The Authentication Information Request includes the SUCI along with the mobile network identifiers and the encryption parameters contained in the Registration Request. In Step 5, the UDM 55 or other network node (e.g., SIDF) validates the SUCI. During the validation process, the UDM 55 decrypts the SUCI using the encryption parameters identified in the received message, The decryption of the SUCI reveals subscription information (e.g., the user's SUPI) that the UDM 55 uses to retrieve the encryption parameters currently provisioned in the UE 70 (meaning to the subscription belonging to that SUPI). If the encryption parameters currently provisioned to the UE 70 match those used to calculate the SUCI, the SUCI is considered valid. Otherwise, the SUCI is determined to be invalid. After validating the SUCI, the UDM 55 at Step 6 returns an Authentication Information Response containing the SUPI and Authentication Vectors (AVs) associated with the subscriber.

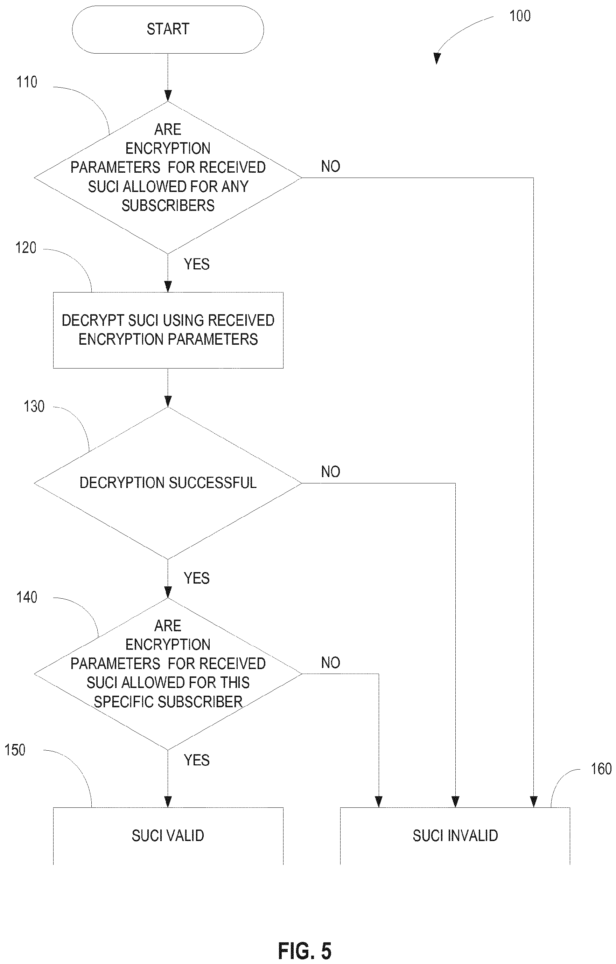

Figure 5 illustrates an exemplary validation method 100 implemented by the UDM 55 or other network node at Step 5 in Figure 4. As previously described, the UDM 55 or other network node first verifies that the SUCI is created using encryption parameters currently in use by some subscriber (block 110). The encryption parameters used to derive the SUCI may be indicated, for example, by a HN-PKI, ESID, or other encryption parameter identifiers sent along with the SUCI. If the encryption parameters are not in use by any subscribers, the SUCI is declared invalid (block 160). If the encryption parameters used to derive the SUCI are determine to be valid, the UDM 55 decrypts the SUCI (block 120) and verifies the result using the decrypted information (block 130). If the decryption fails, the SUCI is declared invalid and the process ends (block 160). If the decryption result is verified, the UDM 55 retrieves the encryption parameters provisioned for the UE 55 (e.g., from a subscriber profile) and compares the encryption parameters currently provisioned to the UE 70 to the encryption parameters used to drive the SUCI (block 140). The encryption parameters. If there is a match, the SUCI is declared valid (block 150). Otherwise, the SUCI is declared invalid (block 160).

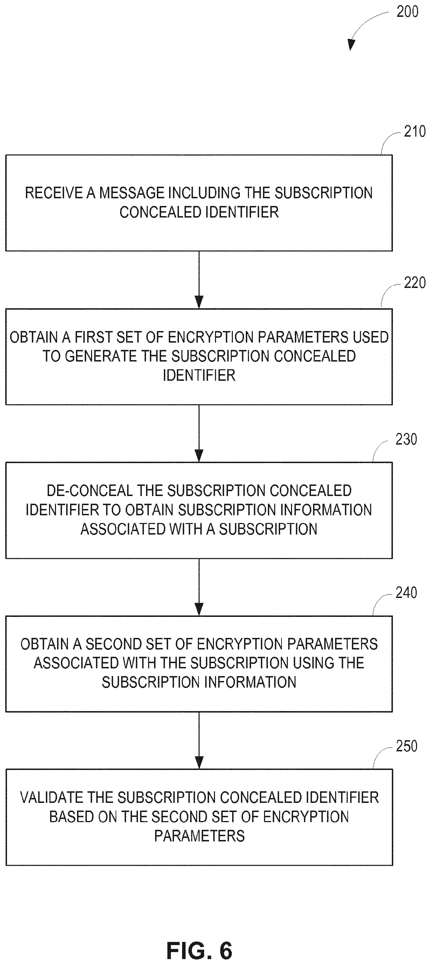

Figure 6 is another exemplary method 200 of validating a SUCI implemented by the UDM 55 or other network node. The method 200 begins when the UDM 55 or other network node receives a message including the SUCI (block 210). Responsive to receipt of the message, the UDM 55 or other network node obtains a first set of encryption parameters used to generate the SUCI (block 220). The UDM 55 uses the first set of encryption parameters to de-conceal the SUCI to obtain subscription information associated with a subscription (block 230). Subsequently, the UDM 55 obtains a second set of encryption parameters associated with the subscription using the subscription information (block 240). Once the second set of encryption parameters is obtained, the UDM 55 validates the SUCI based on the second set of encryption parameters (block 250). As one example, the UDM 55 validates the SUCI by comparing the first set of encryption parameters to the second set of encryption parameters and determining if there is a match.

In some embodiments of the method 200, the first set of encryption parameters is obtained from the received message.

In some embodiments of the method 200, the first set of encryption parameters comprise a key identifier indicating a public key used to generate the subscription concealed identifier.

In some embodiments of the method 200, the first set of encryption parameters comprise a scheme identifier indicating an encryption scheme used to generate the subscription concealed identifier.

In some embodiments of the method 200, the subscription information comprises a subscription permanent identifier, and the subscription permanent identifier is used to obtain the second set of encryption parameters.

In some embodiments of the method 200, validating the subscription concealed identifier comprises determining whether the subscription concealed identifier is valid by comparing the first set of encryption parameters to the second set of encryption parameters.

Some embodiments of the method 200 further comprise performing a security operation depending on whether the subscription concealed identifier is valid.

In some embodiments of the method 200, performing a security operation depending on whether the subscription concealed identifier is valid comprises rejecting the received message responsive to determining that the subscription concealed identifier is invalid.

In some embodiments of the method 200, rejecting the received message comprises rejecting the received message without a response.

Some embodiments of the method 200 further comprise returning an error message responsive to determining that the subscription concealed identifier is invalid.

In some embodiments of the method 200, performing a security operation depending on whether the subscription concealed identifier is valid comprises, responsive to determining that the subscription concealed identifier is invalid determining a total number of related messages that have been received containing an invalid subscription concealed identifier and accepting the received message if the number of related messages is less than a predetermined number.

In some embodiments of the method 200, performing a security operation depending on whether the subscription concealed identifier is valid comprises updating encryption parameters for a user equipment associated with the subscription responsive to determining that the subscription concealed identifier is invalid.

In some embodiments of the method 200, performing a security operation depending on whether the subscription concealed identifier is valid comprises performing an authentication procedure responsive to determining that the subscription concealed identifier is valid.

Some embodiments of the method 200 further comprise verifying that the first set of encryption parameters is valid before de-concealing the subscription concealed identifier.

Some embodiments of the method 200 further comprise verifying that the result of de-concealing is valid before obtaining the second set of encryption parameters.

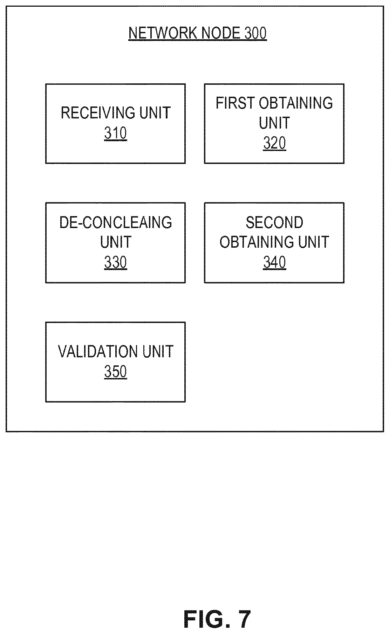

Figure 7 illustrates a network node 300 in accordance with one or more embodiments. The network node 300 is configured to perform validation of the SUCI according to the method shown in Figures 5 and 6. The network node 300 may function as a UDM 55 or other SIDF as herein described. The network node 300 comprises a receiving module/unit 310, a first obtaining module/unit 310, and de-concealing module/unit 330, a second obtaining module/unit 340 and a validation module/unit 350. The receiving module/unit is configured to receiving a message including the subscription concealed identifier. The first obtaining module/unit 320 is configured to obtain a first set of encryption parameters used to generate the subscription concealed identifier. The de-concealing module/unit 330 is configured to de-concealing the subscription concealed identifier to obtain subscription information associated with a subscription. The second obtaining module/unit 340 is configured to obtain a second set of encryption parameters associated with the subscription using the subscription information. The validation module/unit 350 is configured to validate the subscription concealed identifier based on the second set of encryption parameters. The various modules/units 310-350 can be implemented by hardware and/or by software code that is executed by a processor or processing circuit.

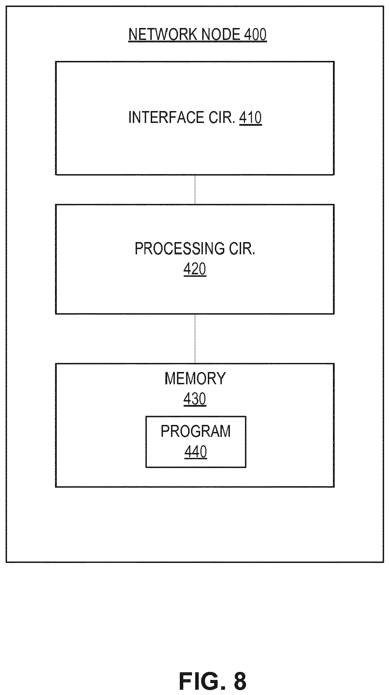

Figure 8 is a functional block diagram of another network node 400 configured to function as a UDM 55 or other SIDF as herein described. The network node 400 comprises an interface circuit 410, a processing circuit 420, and memory 430. The interface circuit 410 provides a communication interface enabling the network node 400 to communicate with other network nodes in the mobile network 10, typically over a wired network. In some embodiments, the interface circuit 410 may couple to an antenna (not shown) and include radio frequency (RF) circuits for communicating wirelessly with other network nodes. The processing circuit 420 controls the overall operation of the network node 400 and processes signals transmitted or received by the network node 400. The processing circuit 420 is configured to perform the methods shown in Figures 5 and 6. The processing circuit 420 may comprise one or more microprocessors, hardware, firmware, or a combination thereof.

Memory 430 comprises both volatile and non-volatile memory for storing computer program code and data needed by the processing circuit 420 for operation. Memory 430 may comprise any tangible, non-transitory computer-readable storage medium for storing data including electronic, magnetic, optical, electromagnetic, or semiconductor data storage. Memory 430 stores a computer program 440 comprising executable instructions that configure the processing circuit 420 to perform the methods according to Figures 5 and 6 as described herein. In general, computer program instructions and configuration information are stored in a non-volatile memory, such as a ROM, erasable programmable read only memory (EPROM) or flash memory. Temporary data generated during operation may be stored in a volatile memory, such as a random access memory (RAM). In some embodiments, computer program 440 for configuring the processing circuit 420 as herein described may be stored in a removable memory, such as a portable compact disc, portable digital video disc, or other removable media. The computer program 440 may also be embodied in a carrier such as an electronic signal, optical signal, radio signal, or computer readable storage medium.

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the description.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

Some of the embodiments contemplated herein are described more fully with reference to the accompanying drawings. Other embodiments, however, are contained within the scope of the subject matter disclosed herein. The disclosed subject matter should not be construed as limited to only the embodiments set forth herein; rather, these embodiments are provided by way of example to convey the scope of the subject matter to those skilled in the art.

## Claims

1. A method implemented by a network node in a mobile network of validating a subscription concealed identifier, which network node is a Unified Data Management, UDM, function or another Subscription Identifier De-concealing Function, SIDF, comprising:
receiving (210) a message including the subscription concealed identifier, wherein the subscription concealed identifier is generated by a user equipment;
obtaining (220) a first set of encryption parameters used to generate the subscription concealed identifier wherein the first set of encryption parameters is obtained from the received message and verifying that the first set of encryption parameters is valid before de-concealing the subscription concealed identifier, wherein the subscription concealed identifier is determined to be invalid when the first set of encryption parameters is not in use;
when determined that the first set of encryption parameters is valid, de-concealing (230) the subscription concealed identifier to obtain subscription information associated with a subscription, wherein the subscription concealed identifier is de-concealed using the first set of encryption parameters and verifying that the result of de-concealing is valid before obtaining the second set of encryption parameters;
when determined that the de-concealing result is valid, obtaining (250) a second set of encryption parameters associated with the subscription using the subscription information wherein the second set of encryption parameters is obtained from a subscriber profile associated to the user equipment; and
validating (260) the subscription concealed identifier based on the second set of encryption parameters, wherein validating (260) the subscription concealed identifier comprises determining whether the subscription concealed identifier is valid by comparing the first set of encryption parameters to the second set of encryption parameters, and any one out of:
- determining that the subscription concealed identifier is valid when the comparison results in a match, or
- determining that the subscription concealed identifier is invalid when the comparison does not result in a match.

2. The method of claim 1, wherein the first set of encryption parameters comprise a key identifier indicating a public key used to generate the subscription concealed identifier.

3. The method of any one of claims 1 - 2, wherein the first set of encryption parameters comprise a scheme identifier indicating an encryption scheme used to generate the subscription concealed identifier.

4. The method of any one of claims 1 - 3, wherein:
the subscription information comprises a subscription permanent identifier; and
the subscription permanent identifier is used to obtain the second set of encryption parameters.

5. The method of any one of claims 1 - 4, further comprising performing a security operation depending on whether the subscription concealed identifier is valid.

6. The method of claim 5, wherein performing a security operation depending on whether the subscription concealed identifier is valid comprises rejecting the received message responsive to determining that the subscription concealed identifier is invalid.

7. The method of claim 6, wherein rejecting the received message comprises rejecting the received message without a response.

8. The method of claim 7, further comprising returning an error message responsive to determining that the subscription concealed identifier is invalid.

9. The method of claim 5, wherein performing a security operation depending on whether the subscription concealed identifier is valid comprises, responsive to determining that the subscription concealed identifier is invalid:
determining a total number of related messages that have been received containing an invalid subscription concealed identifier; and
accepting the received message if the number of related messages is less than a predetermined number.

10. The method of any one of claims 5-9, wherein performing a security operation depending on whether the subscription concealed identifier is valid comprises updating encryption parameters for a user equipment associated with the subscription responsive to determining that the subscription concealed identifier is invalid.

11. The method of claim 5, wherein performing a security operation depending on whether the subscription concealed identifier is valid comprises performing an authentication procedure responsive to determining that the subscription concealed identifier is valid.

12. A network node configured to perform any of the methods in claims 1-11.

13. A computer program comprising executable instructions that, when executed by a processing circuit in a network node of a mobile network, causes the network node to perform any one of the methods of claims 1-11.

## Patentansprüche

1. Verfahren, das von einem Netzwerkknoten in einem Mobilfunknetz implementiert wird, zum Validieren einer verborgenen Teilnahmekennung, wobei es sich bei dem Netzwerkknoten um eine Einheitliches-Datenmanagement-, UDM-, Funktion oder eine andere Funktion zur Entschlüsselung der Teilnahmekennung, SIDF, handelt, umfassend:
Empfangen (210) einer Nachricht, die die verborgene Teilnahmekennung beinhaltet, wobei die verborgene Teilnahmekennung von einer Benutzerausrüstung erzeugt wird;
Erhalten (220) eines ersten Satzes von Verschlüsselungsparametern, der zum Erzeugen der verborgenen Teilnahmekennung verwendet wird, wobei der erste Satz von Verschlüsselungsparametern aus der empfangenen Nachricht erhalten wird, und Überprüfen, dass der erste Satz von Verschlüsselungsparametern gültig ist, bevor die verborgene Teilnahmekennung entschlüsselt wird, wobei die verborgene Teilnahmekennung als ungültig bestimmt wird, wenn der erste Satz von Verschlüsselungsparametern nicht in Verwendung ist;
wenn bestimmt wird, dass der erste Satz von Verschlüsselungsparametern gültig ist, Entschlüsseln (230) der verborgenen Teilnahmekennung, um einer Teilnahme zugeordnete Teilnahmeinformationen zu erhalten, wobei die verborgene Teilnahmekennung unter Verwendung des ersten Satzes von Verschlüsselungsparametern entschlüsselt wird, und Überprüfen, dass das Ergebnis der Entschlüsselung gültig ist, bevor der zweite Satz von Verschlüsselungsparametern erhalten wird;
wenn bestimmt wird, dass das Entschlüsselungsergebnis gültig ist, Erhalten (250) eines zweiten Satzes von Verschlüsselungsparametern, die der Teilnahme zugeordnet sind, unter Verwendung der Teilnahmeinformationen, wobei der zweite Satz von Verschlüsselungsparametern von einem Teilnehmerprofil erhalten wird, das der Benutzerausrüstung zugeordnet ist; und
Validieren (260) der verborgenen Teilnahmekennung auf der Grundlage des zweiten Satzes von Verschlüsselungsparametern, wobei das Validieren (260) der verborgenen Teilnahmekennung das Bestimmen, ob die verborgene Teilnahmekennung gültig ist, indem der erste Satz von Verschlüsselungsparametern mit dem zweiten Satz von Verschlüsselungsparametern verglichen wird, und irgendeines des Folgenden umfasst:
- Bestimmen, dass die verborgene Teilnahmekennung gültig ist, wenn der Vergleich eine Übereinstimmung ergibt, oder
- Bestimmen, dass die verborgene Teilnahmekennung ungültig ist, wenn der Vergleich keine Übereinstimmung ergibt.

2. Verfahren nach Anspruch 1, wobei der erste Satz von Verschlüsselungsparametern eine Schlüsselkennung umfasst, die einen öffentlichen Schlüssel angibt, der zum Erzeugen der verborgenen Teilnahmekennung verwendet wird.

3. Verfahren nach einem der Ansprüche 1-2, wobei der erste Satz von Verschlüsselungsparametern eine Schemakennung umfasst, die ein Verschlüsselungsschema angibt, das zum Erzeugen der verborgenen Teilnahmekennung verwendet wird.

4. Verfahren nach einem der Ansprüche 1 - 3, wobei:
die Teilnahmeinformationen eine permanente Teilnahmekennung umfassen; und
die permanente Teilnahmekennung verwendet wird, um den zweiten Satz von Verschlüsselungsparametern zu erhalten.

5. Verfahren nach einem der Ansprüche 1-4, das weiter Durchführen einer Sicherheitsoperation abhängig davon umfasst, ob die verborgene Teilnahmekennung gültig ist.

6. Verfahren nach Anspruch 5, wobei Durchführen einer Sicherheitsoperation abhängig davon, ob die verborgene Teilnahmekennung gültig ist, Zurückweisen der empfangenen Nachricht als Reaktion darauf umfasst, dass bestimmt wird, dass die verborgene Teilnahmekennung ungültig ist.

7. Verfahren nach Anspruch 6, wobei Zurückweisen der empfangenen Nachricht Zurückweisen der empfangenen Nachricht ohne eine Antwort umfasst.

8. Verfahren nach Anspruch 7, das weiter Zurückgeben einer Fehlermeldung als Reaktion darauf umfasst, dass bestimmt wird, dass die verborgene Teilnahmekennung ungültig ist.

9. Verfahren nach Anspruch 5, wobei Durchführen einer Sicherheitsoperation abhängig davon, ob die verborgene Teilnahmekennung gültig ist, als Reaktion darauf, dass bestimmt wird, dass die verborgene Teilnahmekennung ungültig ist, Folgendes umfasst:
Bestimmen einer Gesamtanzahl zusammengehöriger Nachrichten, die eine ungültige verborgene Teilnahmekennung enthaltend empfangen worden sind; und
Akzeptieren der empfangenen Nachricht, wenn die Anzahl der zusammengehörigen Nachrichten geringer als eine vorgegebene Anzahl ist.

10. Verfahren nach einem der Ansprüche 5-9, wobei Durchführen einer Sicherheitsoperation abhängig davon, ob die verborgene Teilnahmekennung gültig ist, Aktualisieren von Verschlüsselungsparametern für eine Benutzerausrüstung, die der Teilnahme zugeordnet sind, als Reaktion darauf umfasst, dass bestimmt wird, dass die verborgene Teilnahmekennung ungültig ist.

11. Verfahren nach Anspruch 5, wobei Durchführen einer Sicherheitsoperation abhängig davon, ob die verborgene Teilnahmekennung gültig ist, Durchführen einer Authentifizierungsprozedur als Reaktion darauf umfasst, dass bestimmt wird, dass die verborgene Teilnahmekennung gültig ist.

12. Netzwerkknoten, der zum Durchführen irgendeines der Verfahren nach den Ansprüchen 1-11 konfiguriert ist.

13. Computerprogramm, das ausführbare Anweisungen umfasst, die, wenn sie von einer Verarbeitungsschaltung in einem Netzwerkknoten eines Mobilfunknetzwerks ausgeführt werden, den Netzwerkknoten veranlassen, eines der Verfahren nach den Ansprüchen 1-11 durchzuführen.

## Revendications

1. Procédé mis en oeuvre par un noeud de réseau dans un réseau mobile pour valider un identifiant masqué d'abonnement, lequel noeud de réseau est une fonction de gestion unifiée de données, UDM, ou une autre fonction de d'affichage d'identifiant d'abonnement, SIDF, comprenant :
la réception (210) d'un message incluant l'identifiant masqué d'abonnement, dans lequel l'identifiant masqué d'abonnement est généré par un équipement d'utilisateur ;
l'obtention (220) d'un premier ensemble de paramètres de chiffrage utilisé pour générer l'identifiant masqué d'abonnement, dans lequel le premier ensemble de paramètres de chiffrage est obtenu à partir du message reçu, et la vérification que le premier ensemble de paramètres de chiffrage est valide avant d'afficher l'identifiant masqué d'abonnement, dans lequel l'identifiant masqué d'abonnement est déterminé comme étant invalide lorsque le premier ensemble de paramètres de chiffrage n'est pas utilisé ;
lorsqu'il est déterminé que le premier ensemble de paramètres de chiffrage est valide, l'affichage (230) de l'identifiant masqué d'abonnement pour obtenir des informations d'abonnement associées à un abonnement, dans lequel l'identifiant masqué d'abonnement est affiché en utilisant le premier ensemble de paramètres de chiffrage, et la vérification que le résultat d'affichage est valide avant d'obtenir le second ensemble de paramètres de chiffrage ;
lorsqu'il est déterminé que le résultat d'affichage est valide, l'obtention (250) d'un second ensemble de paramètres de chiffrage associé à l'abonnement en utilisant les informations d'abonnement, dans lequel le second ensemble de paramètres de chiffrage est obtenu à partir d'un profil d'abonné associé à l'équipement d'utilisateur ; et
la validation (260) de l'identifiant masqué d'abonnement sur la base du second ensemble de paramètres de chiffrage, dans lequel la valisation (260) de l'identifiant masqué d'abonnement comprend la détermination pour établir si l'identifiant masqué d'abonnement est valide en comparant le premier ensemble de paramètres de chiffrage avec le second ensemble de paramètres de chiffrage, et l'une quelconque parmi :
- la détermination que l'identifiant masqué d'abonnement est valide lorsque la comparaison aboutit à une correspondance, ou
- la détermination que l'identifiant masqué d'abonnement est invalide lorsque la comparaison n'aboutit pas à une correspondance.

2. Procédé selon la revendication 1, dans lequel le premier ensemble de paramètres de chiffrage comprend un identifiant de clé indiquant une clé publique utilisée pour générer l'identifiant masqué d'abonnement.

3. Procédé selon l'une quelconque des revendications 1-2, dans lequel le premier ensemble de paramètres de chiffrage comprend un identifiant de schéma indiquant un schéma de chiffrage utilisé pour générer l'identifiant masqué d'abonnement.

4. Procédé selon l'une quelconque des revendications 1-3, dans lequel :
les informations d'abonnement comprennent un identifiant permanent d'abonnement ; et
l'identifiant permanent d'abonnement est utilisé pour obtenir le second ensemble de paramètres de chiffrage.

5. Procédé selon l'une quelconque des revendications 1-4, comprenant en outre la réalisation d'une opération de sécurité selon que l'identifiant masqué d'abonnement est valide ou non.

6. Procédé selon la revendication 5, dans lequel la réalisation d'une opération de sécurité selon que l'identifiant masqué d'abonnement est valide ou non comprend le rejet du message reçu en réponse à la détermination que l'identifiant masqué d'abonnement est invalide.

7. Procédé selon la revendication 6, dans lequel le rejet du message reçu comprend le rejet du message reçu sans réponse.

8. Procédé selon la revendication 7, comprenant en outre le renvoi d'un message d'erreur en réponse à la détermination que l'identifiant masqué d'abonnement est invalide.

9. Procédé selon la revendication 5, dans lequel la réalisation d'une opération de sécurité selon que l'identifiant masqué d'abonnement est valide ou non comprend, en réponse à la détermination que l'identifiant masqué d'abonnement est invalide :
la détermination d'un nombre total de messages associés qui ont été reçus contenant un identifiant masqué d'abonnement invalide ; et
l'acceptation du message reçu si le nombre de messages associés est inférieur à un nombre prédéterminé.

10. Procédé selon l'une quelconque des revendications 5-9, dans lequel la réalisation d'une opération de sécurité selon que l'identifiant masqué d'abonnement est valide ou non comprend la mise à jour des paramètres de chiffrage pour un équipement d'utilisateur associé à l'abonnement en réponse à la détermination que l'identifiant masqué d'abonnement est invalide.

11. Procédé selon la revendication 5, dans lequel la réalisation d'une opération de sécurité selon que l'identifiant masqué d'abonnement est valide ou non comprend la réalisation d'une procédure d'authentification en réponse à la détermination que l'identifiant masqué d'abonnement est valide.

12. Noeud de réseau configuré pour réaliser l'un quelconque des procédés selon les revendications 1-11.

13. Programme informatique comprenant des instructions exécutables qui, lorsqu'elles sont exécutées par un circuit de traitement dans un noeud de réseau d'un réseau mobile, amènent le noeud de réseau à réaliser l'un quelconque des procédés selon les revendications 1-11.
